# EUROPEAN PATENT SPECIFICATION

(11) **EP 1 066 477 B1**
(45) Date of publication and mention of the grant of the patent: **13.10.2004**
(21) Application number: 99910998.6
(22) Date of filing: 26.02.1999
(51) Int. Cl.: F16D 41/12

(54) **RATCHET ONE-WAY CLUTCH ASSEMBLY**
KLINKENEINWEGKUPPLUNGSANORDNUNG
EMBRAYAGE A ROUE LIBRE A ROCHETS

(30) Priority: 02.03.1998 US 33451; 25.02.1999 US 257028
(43) Date of publication of application: 10.01.2001
(60) Divisional application: 03078117.3
(73) Proprietor: BorgWarner Inc., Auburn Hills, MI 48326-1782 (US)
(72) Inventor: COSTIN, Daniel, P., Naperville, IL 60565 (US); PAPANIA, James, R., Bolingbrook, IL 60440 (US); BACON, Duane, A., Vinton, OH 45686 (US); PAVANGAT, Nirmal, R., Rochester Hills, MI 48309 (US); WELLS, James, R., Sterling Heights, MI 48313 (US); BENO, Gerald, F., Shelby Township, MI 48316 (US); GREEN, Ronald, F., Birmingham, MI 48009 (US)
(74) Representative: Lerwill, John
(86) International application number: PCT/US1999/004170
(87) International publication number: WO 1999/045289

(56) References cited:
- EP-A- 0 539 883
- DE-A- 4 445 634
- DE-C- 3 331 347
- GB-A- 190 602 116
- US-A- 2 433 336
- US-A- 2 710 504
- US-A- 5 690 202
- US-A- 5 855 263

## Description

### Technical Field

The invention relates to ratchet one-way clutch assemblies with centrifugally engaging/disengaging pawls and stators made from non-ferrous materials.

### Background Art

There are various types of one-way clutch assemblies in use today. Such clutch assemblies include sprag-type, roller-type, and pawl ratchet-type assemblies. All of these one-way clutch assemblies work satisfactorily depending upon the particular application in which they are used.

In certain transmissions, increased torque capacity is needed for one-way clutch assemblies. Space constraints also require that the size of the clutch assembly be retained within certain limits. Current one-way clutch assemblies with sprags or rollers are often insufficient to add increased load carrying capacity and still maintain the space constraints.

Pawl one-way clutch assemblies can add increased nominal load capacity for a given package size. The design limits of a ratchet-type pawl clutch assembly are dictated by contact stress between the pawls and the races and/or bending, shear and hoop stresses generated within the races.

Ratchet clutch assemblies have at least one pawl which acts to lock two notched or pocketed races together in one direction and rotate freely in the other direction. In general, the differences between known ratchet clutch assemblies relate to the control of the movement of the pawls and the effect on that movement by centrifugal forces. Ratchet clutch assemblies are shown, for example, in U.S. Patent Nos. 2,226,247, 3,554,340 and 5,449,057. Another ratchet clutch assembly is shown in British Patent No. 2116.

It is an object of the present invention to provide improved ratchet one-way clutch assemblies. It is another object of the present invention to provide improved ratchet clutch assemblies which have improved operation at high speeds.

It is also an object of the present invention to provide ratchet one-way clutch assemblies in which the pawls are provided with tilting forces or inclinations toward engagement. It is still another object of the present invention to provide ratchet one-way clutch assemblies which utilize springs to place tilting forces on the pawls toward engagement.

It is a further object of the present invention to provide improved ratchet clutch assemblies which are less expensive and lighter in weight than known assemblies and yet are comparable in operation and performance. It is a still further object of the present invention to provide ratchet one-way clutch assemblies made of non-ferrous materials, such as plastic or aluminum, which are strong, durable and lightweight.

It is an additional object of the present invention to provide ratchet one-way clutch assemblies which utilize springs to place tilting forces on the pawls toward engagement. It is also an object of the present invention to provided ratchet one-way clutch assemblies in which the outer race members are incorporated directly into, or as part of, stator/reactor members.

WO 98/10203 forms part of the state of the art under Art. 54(3) EPC and discloses a number of one-way ratchet clutch assemblies. All of the assemblies have an inner member with notches, an outer member with pockets and pawl members positioned in the pockets for engagement with the notches. Various types of spring member are utilised for biasing the pawl members towards engagement with the notches, and each of the spring members has a different width to the pawl members.

US-A-2,710,504 describes a one-way ratchet cloth with an outer member with pockets, an inner race member with notches, pawl members in said pockets and a biasing spring for biasing said pawl members.

### Summary Of The Invention

The above and other objects of the invention are met by the present invention which is an improvement over known ratchet one-way clutch assemblies.

The present invention provides a one-way ratchet clutch assembly comprising:
an outer member having a plurality of first pockets;
an inner race member having a plurality of notches; and
a plurality of pawl members, one of said pawl members positionable in each of said pockets;
biasing means for biasing said pawl members towards engagement with said notches;
said biasing means comprising at least one spring member positionable in operative engagement with at least one of the pawl members and;
said pawl members each having a ridge thereon and said first pockets each having a corresponding first recess for mating with said ridge,
wherein
the at least one spring member has substantially the same axial width as the pawl members.

The notches may be toothed and are positioned on the outer circumference of the inner race member to mate with the pawls in locking engagement during relative rotation of the races, or of the inner race and stators, in one direction. The notches can contain teeth on the outside of the race member which are shaped to prevent rotation of the outer race or stator in one direction, but allow freewheeling rotation in the opposite direction. The inside diameter of the inner race member can be adapted to mate with and be securely positioned to a support shaft, such as a stationary support shaft of a vehicle transmission.

The center of mass of the pawls can be situated or positioned as desired such that when the clutch rotates, the centrifugal force on the center of mass causes the pawl to move toward the engaged or disengaged positions. This can be accomplished without an axle or stationary pivot.

The spring members, can be garter springs, coil springs, ribbon springs, Z-shaped springs, individual leaf-springs and the like. The spring forces can be applied on one or more circumferential grooves in the pawls, or the spring forces can act on the pawl members themselves or in recesses that extend axially along the pawls. The spring members can be wide z-shaped springs which can be folded in the axial direction or in a tangential direction.

Preferably, the stator member is made of non-ferrous material which is lighter in weight than materials conventionally used for clutch assemblies, particularly the outer race members. The non-ferrous material can be a metal material, such as aluminum, or a plastic material, such as polyethylene, which meet the durability and strength standards necessary for the application of the clutch assembly.

The ridge in the outer race or stator pocket can be located relative to the center of mass of the pawls in order to control the engaging force. This is necessary for high speed durability. In this regard, it is possible in accordance with alternative embodiments of the invention to position the center of mass such that the pawl is urged toward the engaged position, or even a "neutral position" neither engaged nor disengaged.

The spring forces can be applied on a center groove or one or more side grooves in the pawl members, or the spring forces can act on the pawl members themselves, or in recesses that extend axially along the length of the pawl.

Other embodiments of the invention utilize one or more axial retainment devices. These devices include pairs of washers, or plastic retainers with axial extending flange members. The devices retain the pawls axially and also hold the races in axial radial alignment, while allowing relative rotation. The retainment devices also can act as thrust bearings and can retain required lubrication to prevent excessive wear of the pawls.

By eliminating the outer race members of clutch assemblies and incorporating the pawl pockets directly in a stator or reactor mechanism, or other similar member, expenses in materials and manufacturing procedures can be reduced. Similarly, the inner race member can be eliminated and the notches incorporated directly into a central shaft member or the like. Again, this could cause savings in materials, manufacturing time and expense.

The present invention ratchet one-way clutch assembly has particular use in vehicle transmissions and can be used in environments where both races rotate or where one of the races is fixed. The invention can also be used in any mechanism where a positive backstop is desired to prevent undesired reverse or backward rotation, such as in an escalator mechanism or the like.

Other features, benefits and advantages of the present invention will become apparent from the following description of the invention, when viewed in accordance with the attached drawings and appended claims.

### Brief Description Of The Drawings

FIGURE 1 illustrates a ratchet one-way clutch assembly having some of the basic constituents of the present invention;
FIGURE 2 is an enlarged view of a portion of the clutch assembly shown in Figure 1;
FIGURE 3 and 4 illustrate an alternative assembly which utilizes spring members, and does not embody the invention, with Figure 4 being an elevational view and Figure 3 being an exploded view thereof;
FIGURES 5 and 6 show partial cross-sectional views of the assembly shown in Figure 4, the cross-sectional views being taken along lines 5-5 and 6-6, respectively, in Figure 4 and in the direction of the arrows;
FIGURE 7 is an enlarged view of a portion of the clutch assembly shown in Figure 4;
FIGURES 8, 9 and 10 illustrate various types of pawl members for use with a first spring-type not embodying the present invention;
FIGURES 11 and 12 illustrate a type of pawl member for use with a second spring-type not embodying the present invention;
FIGURES 13 and 14 illustrate a further variant not embodying the present invention, with Figure 14 being an elevational view and Figure 13 an exploded view thereof;
FIGURES 15 and 16 show partial cross-sectional views of the clutch assembly shown in Figure 14, the cross-sectional views being taken along lines 15-15 and 16-16, respectively, in Figure 14 and in the direction of the arrows;
FIGURE 17 is an enlarged view of a portion of the clutch assembly embodiment shown in Figure 14;
FIGURES 18 and 19 depict a ribbon spring not embodying the present invention;
FIGURES 20 and 21 depict a coil spring embodiment not embodying the present invention;
FIGURES 22-27 depict embodiments of the invention, including embodiments with resilient members extending substantially across the axial widths of the pawl members;
FIGURES 28-33A depict further embodiments of the invention with wide spring members.
FIGURE 34 illustrates an assembly wherein the pawl pockets are incorporated directly in a stator reactor assembly;
FIGURE 35 is a cross-sectional view of the assembly of Figure 34, the cross-sectional view being taken along line 35-35 in Figure 34 and in the direction of the arrow;
FIGURE 36 shows a variant of the assembly shown in Figures 34-35 not embodying the invention;
FIGURE 37 is an enlarged view of a portion of the assembly shown in Figure 36;
FIGURE 38 is a perspective view of the reinforcing members utilized in the embodiment shown in Figures 36-37;
FIGURE 39 illustrates an assembly wherein the engaging notches for the pawl members are incorporated directly on a shaft member;
FIGURE 40 illustrates pawl and pocket members for use with the present invention;
FIGURE 41 depicts another assembly not embodying the invention; and
FIGURES 42-44 depict the presently preferred embodiment of the invention.

### Best Mode(s) For Carrying Out The Invention

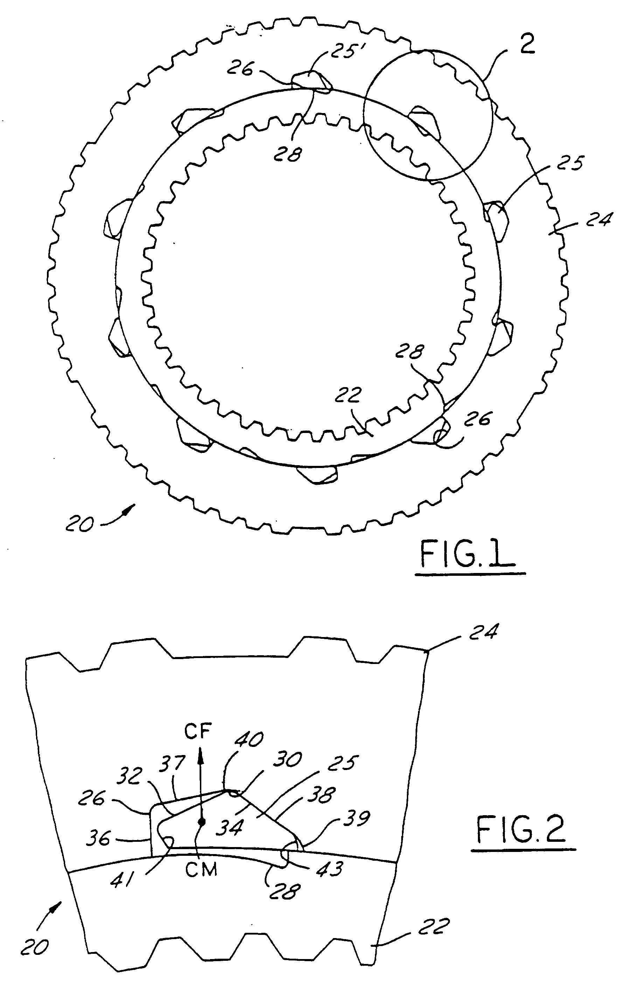

Figure 1 schematically illustrates one type of a ratchet one-way clutch assembly 20. The assembly 20 includes an inner race member 22, an outer race member 24, and a plurality of individual pawl members 25. The pawl members 25 are positioned in pockets 26 in the outer race member. A plurality of notches 28 are positioned in the outer circumference or periphery of the inner race member 22. The notches provide teeth which are shaped to prevent rotation of the two races relative to one another in one direction, but allow rotation in the other direction.

When the motion of the inner race member 22 relative to the outer race member 24 is in the clockwise direction in Figure 1, the inner race member rotates freely. When the relative motion of the inner race member 22 relative to the outer race member 24 is counter-clockwise, the inner race member and outer race member are locked together by one of the pawls 25. In this regard, in Figure 1, the locked pawl is indicated by the reference numeral 25'. The pawl 25' transmits force through pocket 26 in the outer race member and notch 28 in the inner race member.

In the clutch assembly shown in Figure 1, ten pockets 26 and ten pawl members 25 are shown, together with eleven notches 28 in the inner race member 22. Although the assembly shown in Figure 1 only shows one pawl 25' in engagement, more than one pawl can be engaged at one time depending on the relative number and location of the pawls and notches, as well as manufacturing tolerances. Mathematically, more than one pawl member can be engaged if the number of pawls and notches are both wholly divisible by a common denominator other than one.

Figure 2 is an enlarged view of a portion of the clutch assembly shown in Figure 1. The pawl 25 shown in Figure 2 is depicted in the free-wheeling position. In accordance with the present invention, the cross-section of the pawl 25 has a peak or pivot ridge 30 formed by the intersection of two substantially flat sides 32 and 34. The peak 30 of the cross-section forms a pivot ridge with the outer race pocket 26 which is shaped to receive the pawl member. In this regard, the pocket 26 has substantially straight sides 36, 37, 38 and 39.

In accordance with the assembly shown in Figure 2, the center of mass (cm) of the pawl member 25 is positioned to the left of the pivot ridge 30. In this manner, as the clutch assembly 20 rotates, a centrifugal force (CF) on the center of mass (CM) causes the pawl 25 to move toward the engaged position, that is, the position where it would be engaged with notch 28 in the inner race member 22. The torque on the pawl member 25 is proportional to the tangential distance of the CM away from the ridge 30.

Although the assembly shown in Figures 1 and 2 shows a pawl member with the center of mass positioned, together with the pocket in the outer race, such that the pawl has a tendency to move toward the engaged position, this is not essential. For example, the geometry of the pawl can be changed to provide a pawl with a disengaging tendency. In this manner, the CM could be positioned to the right of the pivot ridge 30.

The pocket 26 in the outer race also has a peak or recess 40 which mates with the pivot ridge 30 of the pawl member 25. The peak 40 in the pocket holds the pawl 25 in the proper circumferential location for free movement in the pocket. This prevents the ends 42 and 43 of the pawl member 25 from coming in contact with the sides 36 and 39, respectively, of the pocket. If the ends of the pawl were to contact the adjacent areas of the outer race pocket, friction could slow the movement of the pawl toward engagement. Preferably, it is desirable for the pawls to rotate into engagement with the inner race member as quickly as possible.

The ridge on the pawl is precisely located relative to the center of mass of the pawl, regardless of the exact location of the pawl with respect to the outer race member. This allows precise control of the engaging force, which is preferred for high speed operation. This is also accomplished with a relatively simple geometry which does not include an axle, separate pivot member, or the like. Moreover, the outer race pocket is shaped such that it also has a corresponding peak or recess, which retains the pawl in a precise location in the pocket. This location prevents the pawl from contacting the sides or ends of the pocket as it rotates toward engagement.

Preferably, the pawl members 25 are made of a hardened steel material and formed by pieces cut from a drawn wire. This allows precise control of the geometry of the pawl, and also allows precise control of the center of mass relative to the peak or pivot ridge 30. In this regard, it is possible to control the center of mass within a tolerance of 0.001 inches (0.025 mm).

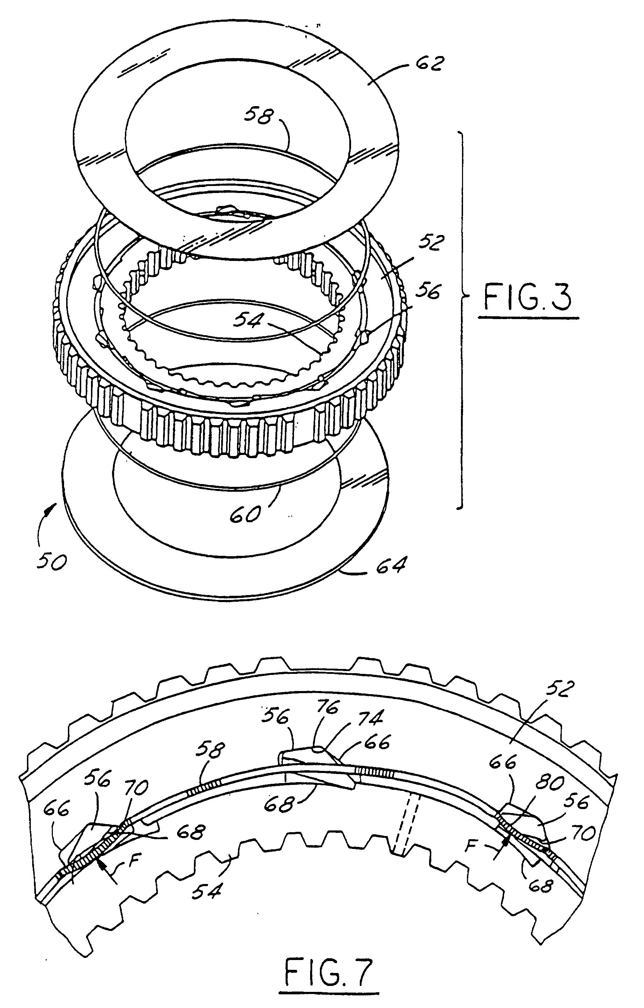

Another assembly is shown in Figures 3-8. This assembly is referred to generally by the reference numeral 50 in the drawings. In the one-way ratchet clutch assembly 50, a spring is used to provide a tilting force on the pawl members toward engagement. A spring is particularly needed for pawls which are disengaged centrifugally, as well as for engaging pawls that must engage when the outer race is stationary. In Figures 3-8, the assembly 50 includes an outer race member 52, an inner race member 54, a plurality of pawl members 56, and a pair of garter springs 58 and 60. A pair of retainment washers 62 and 64 are also provided in the embodiment shown in Figure 3 and are discussed further below.

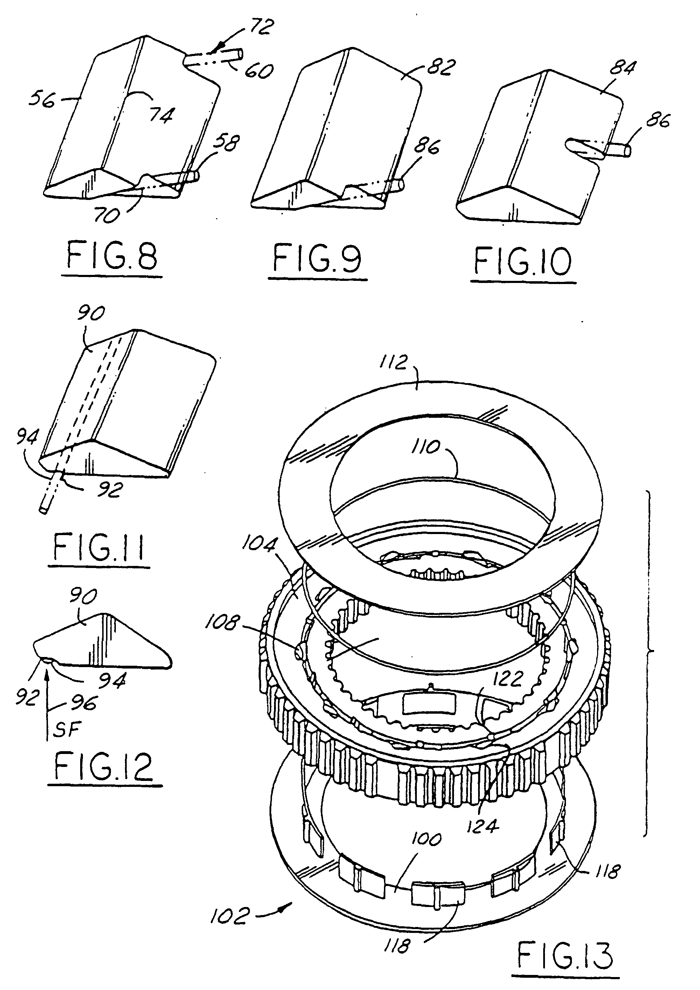

As shown more particularly in Figure 7, the pawl members 56 are positioned in pockets 66 in the outer race members 52 and are adapted to engage with notches 68 in the inner race 54. The garter springs 58 and 60, only one of which is shown in Figure 7, are made from a small coil of wire and are commonly available. For the embodiment shown in Figure 3 which utilizes two garter springs 58 and 60, a plurality of pawl members 56 are utilized as shown in Figure 8. Each of the pawl members 56 has a pair of recesses or side grooves 70 and 72. The garter springs 58 and 60 are positioned in the grooves 70 and 72 when the pawl members are positioned in the outer race. The rest of the structure of the pawl member 56 is similar to pawl members 25 described above with respect to Figures 1 and 2; in this regard, the pawl members have pivot ridges 74 which mate with peaks or recesses 76 in the pockets 66.

The operation of the spring members 58 and 60 is shown with reference to spring 58 and pawl members 56 in Figure 7. In this regard, when the pawl members are in their disengaged position, the garter spring 58 provides a force toward the outer race member and thus toward the engaging position of the pawl member. This spring provides a force F (as shown in Figure 7) against surface 80 of each of the pawl members. When the pawl members 56 are in their engaged positions, that is, mated with notches 68 in the inner race, the spring member 58 is relaxed and does not provide a spring force on the pawl members. This is shown with respect to the center pawl member 56 in Figure 7.

The spring force can also be arranged to act on a single side groove or a center groove of the pawl geometry. This is shown in Figures 9 and 10, respectively, where the pawl members are referred to by the reference numbers 82 and 84. The garter spring is indicated in phantom lines and is referred to by reference numeral 86. If either of the pawls shown in Figures 9 and 10 are utilized with the assembly shown in Figures 3-7, then the position of the garter spring and the number of garter springs provided is adjusted accordingly.

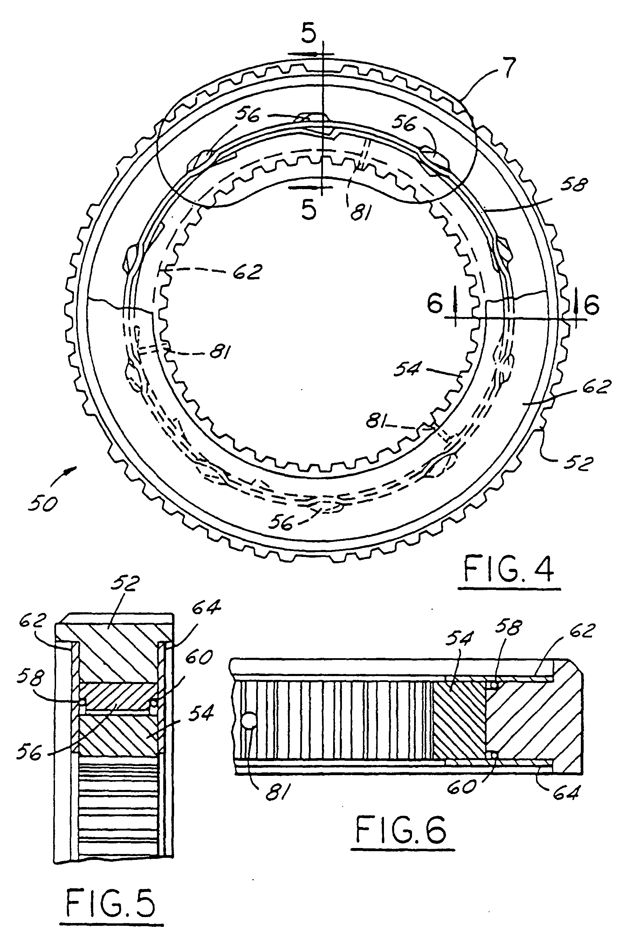

Opening or aperture 81 in the inner race 54 (Figure 6) provides an access hole for lubrication relative to the transmission or other mechanism in which the one-way clutch assembly 50 is utilized. Preferably, several access holes are provided in the clutch assembly.

The spring force on the pawl members can also be applied in another manner. As shown in Figures 11 and 12, the pawl member 90 has a longitudinally or axially extending groove 92. A small ribbon spring 94 is utilized to provide a spring force (SF) in the direction of arrow 96. The ribbon springs 94 are preferably cut from thin strips of spring steel material and are positioned in the grooves 92 in order to provide a force SF toward engagement of the pawl members 90.

The washers 62 and 64, as shown in Figures 3-6, are also known as axial retainment devices or members and can be used to improve or enhance the operation of the present invention. The members 62 and 64 retain the pawl members axially (longitudinally) in the clutch assemblies. The retainment members also hold the inner and outer races in axial alignment, while allowing free relative rotation. Moreover, the axial retainment members act as thrust bearings between the clutch assembly and external parts of the mechanism that are rotating relative to the clutch assembly and must carry an axial load through the assembly. Finally, the axial retainment members (washers) 62 and 64 can retain lubrication in the clutch assembly which is required to prevent excess wear of the pawl members.

The washers 62 and 64 can be connected to the outer race through a press-fit arrangement, staking, welding, or mechanical fastening in any conventional manner.

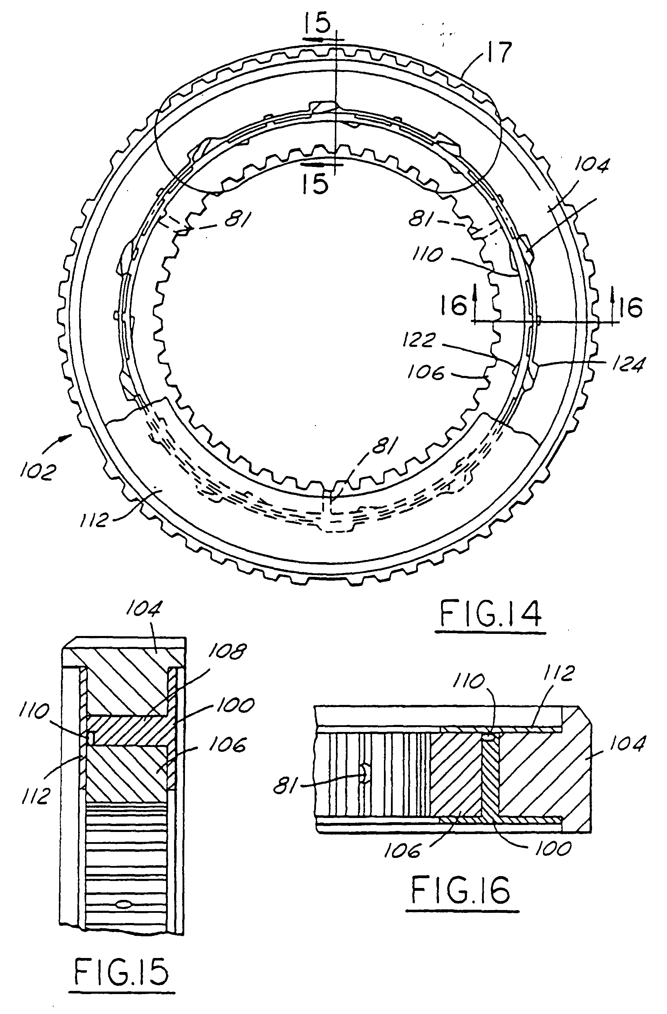

An injection molded plastic retainer (retainment) member can also be utilized. Such a member 100 is shown in Figures 13-17. In these Figures, the one-way ratchet clutch assembly is referred to generally by the reference numeral 102. Together with the retainer member 100, the assembly 102 includes an outer race member 104, an inner race member 106, a plurality of pawl members 108, a garter spring member 110 and a second retainer member 112.

In this regard, in the embodiment of the invention shown in Figures 13-17, the pawl members 108 can be of any of the types shown and described earlier. In addition, the pawl members 108 are contained in pockets 124 in the outer race member and engage notches 122 in the inner race member, in the same manner described above with reference to Figures 1-12.

The retaining member 100 has a plurality of flanges or upstanding actuate-shaped guide members 118 situated to be positioned within the annular space between the inner and outer races 106 and 104, respectively. The member 100 is a radial bearing retainer for the pawls and the race members, and also acts as a lube dam for lubrication. The retainer members 100 and 112 are preferably attached together to retain the clutch assembly together axially. The retainer members also act a s thrust bearings between the assembly and external parts of the mechanism that are rotating relative to the clutch assembly and carry axial loads through the assembly. The retainer members 100 and 112 can be connected together in any conventional manner, such as a press-fit arrangement, staking, ultrasonic welding, mechanical fastening, or the like. Preferably, the retainer member 100 is made from an injection molded plastic material, and also preferably has a low friction coefficient so that it can provide improved bearing performance over regular steel-on-steel bearings.

Another ribbon spring is shown in Figures 18 and 19. Here, pawl members 90' are utilized which are the same as pawl members 90 described earlier, and have an axial groove 92'. A ribbon spring member 130 has an annular circular shape and is adapted to fit between the inner and outer race members of the clutch assembly. The member 130 is preferably made of spring steel and has a plurality of openings or windows 132 (only one of which is shown), each with a tab member 134. The pawl members 90' are positioned in the openings 132 and the tab members are positioned in the grooves 92'. The ribbon spring members 130 through the tab members 134 provides a biasing force on the pawl members 90' toward engagement with the notches on the inner race member. Also, although the tab member 134 illustrated in Figure 18 only covers a small part of the width of the window 132 and the width of pawl 90', it is to be understood that tabs can be provided on the spring member 130 which extend most or entirely across the width of the window and pawl member.

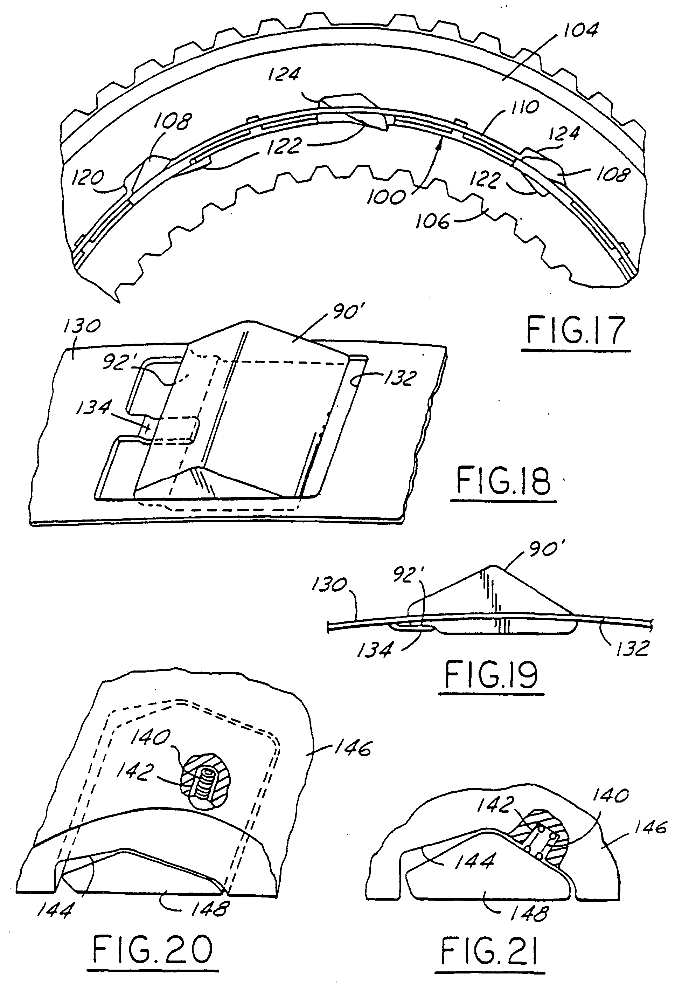

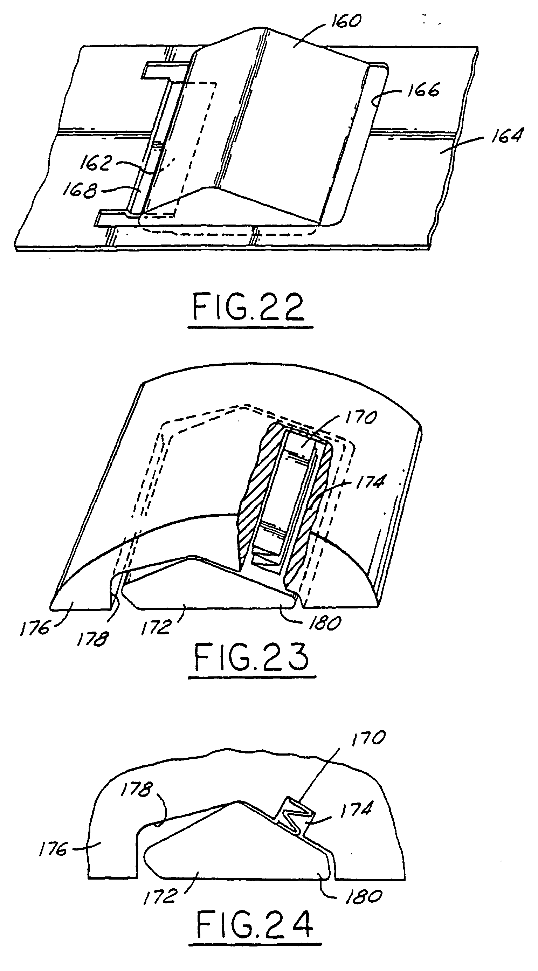

The spring mechanism for biasing the pawl members toward engagement with the inner race notches can have a wide variety of forms. Other than garter and ribbon springs described above, other spring members, such a coil springs, leaf springs, and the like could be utilized. For example, in this regard, a coil spring is shown in Figures 20 and 21. One or more coil springs 140 are positioned in recesses or bores 142 which connect to pockets 144 in the outer race member 146. The coil springs 140 bias the pawl members 148 radially inwardly toward the inner race member.

In the embodiment of the invention shown in Figures 22-24, the resilient biasing members extend across all or substantially all of the width of the pawl member. In Figure 22 (which is related to the embodiment shown in Figures 18 and 19), the pawl members 160 have an axial groove 162. A ribbon-type spring member 164 has an annular shape and is adapted to fit between the inner and outer race members of the clutch assembly. The member 164 is preferably made of spring steel and has a plurality of openings or windows 166 (only one of which is shown), each with a tab member 168. The pawl members 160 are positioned in the openings 166 and the tab members 168 are positioned in the grooves 162. The ribbon spring member 164 through the tab members 168 provides biasing forces on each of the pawl members 160 in the clutch assembly toward engagement with the notches on the inner race member.

The spring tab member 168 is wider than the spring tab member 134 utilized with the embodiment shown in Figures 18 and 19. The wide spring member substantially reduces the rolling mode of rotation of the pawl member. As a result, the wide spring member prevents rattling of the pawl during the free wheeling mode of operation of the clutch assembly. Not only does the wide spring structure restrain the rolling mode of rotation, but it enhances fluid damping of the pawl members.

Another embodiment of the invention utilizing a wide spring member is shown in Figures 23 and 24. In this embodiment, a wide accordion-type (or "Z-spring") spring member 170 is located radially outwardly of the pawl member 172. The spring member 170 is positioned in a recess or pocket 174 in the outer race member 176 which connects with the pawl pocket 178. The spring member 170, which preferably is made from a spring steel or equivalent material, pushes the toe 180 of the pawl member 172 into engagement with the notches in the inner race member. The width of the spring member 170 restrains the rolling mode of rotation of the pawl member. Fluid and frictional damping are also obtained with this design. The width of the spring member 170 preferably is substantially the same as the width of the pawl member, although it can also be slightly greater if space permits.

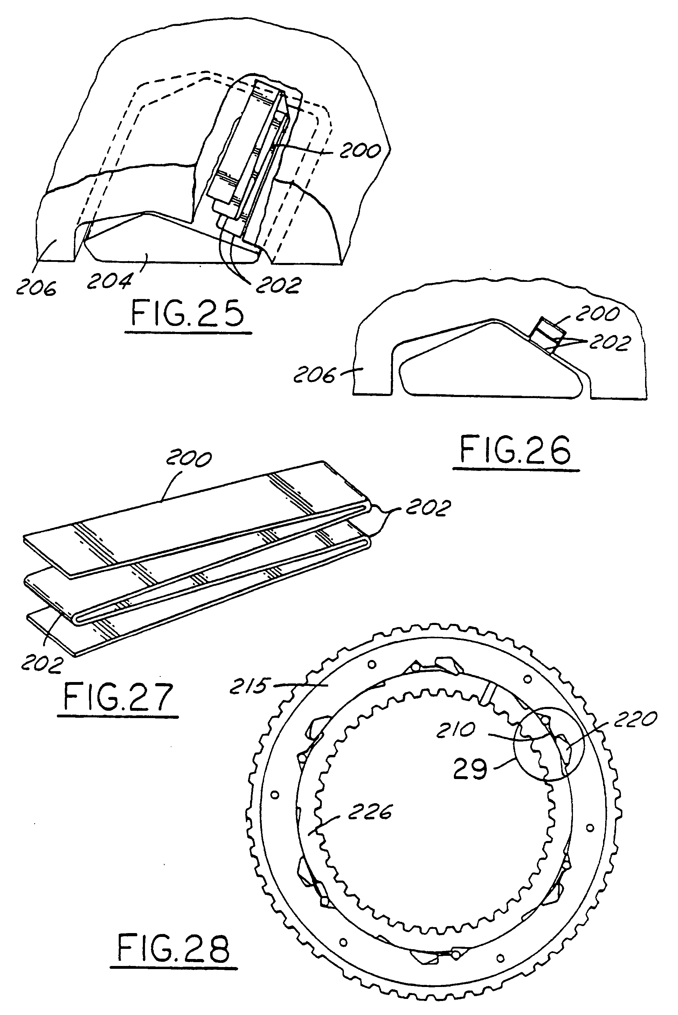

Another type of accordion or Z-type spring member 200 which can be used with the present invention is shown in Figures 25-27. The spring member 200 is made from a single piece of spring steel or equivalent material and is cut and folded in the manner depicted. With spring member 200, the folds 202 are oriented in the tangential (annular) direction (transverse to the axial direction of the clutch) with the folds on the ends being positioned adjacent the outer or side surfaces of the clutch race members.

The spring member 200 is used to bias the pawl member 204 in the outer race member 206 in a direction toward engagement with the notches in the inner race member. Preferably, the spring member 200 extends the entire width, or substantially the entire width, of the pawl member 204.

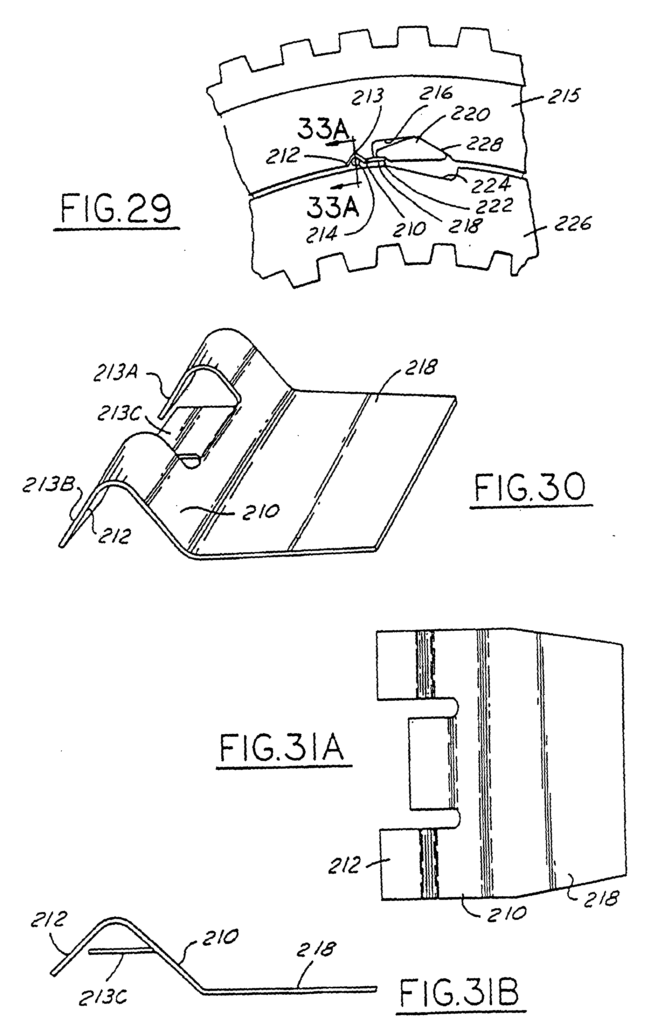

Another wide spring member 210 is shown in Figures 28-33A. This spring member is an individual spring member made of stainless steel (spring temper or high yield) and bent into the shape shown. The spring member 210 has an inverted V-shaped portion 212 which fits around a rivet 214, which in turn is secured in ancillary pocket 213 adjacent the main pawl pocket 216 in outer race member 215. The flat flange portion 218 of spring member 210 fits under recessed portion 222 of pawl member 220 and acts to bias the pawl member into engagement with notches 224 in inner race member 226. The pawl member 220 also has a recessed curved groove 228 on one surface to prevent the pawl from sticking to the surface of the pocket.

As shown in cross-section Figure 33A, when the spring member 210 is assembled in the clutch assembly, outer portions 213A and 213B of the V-shaped portion 212 are braced against the ancillary pocket 213 while center portion 213C is braced against the rivet member 214. Also, preferably a pair of washers or discs 219 are provided to assist in retaining the spring member 210 in place in the clutch assembly.

The wide-type spring members of the types shown in Figures 22-33A can be placed in various locations in clutch assemblies, and can be used on various types of ratchet clutches, including conventional ratchet clutches, ratchet clutches with pivot ridges on the pawl members, and planar ratchet clutches. Further, if desired, separate inner and/or outer race members can be eliminated from the mechanical structure in which the clutch-type mechanism is utilized, and the pawl pockets and mating "lock-up" notches can be formed directly in the mating mechanical structural parts, such as a rotor or shaft.

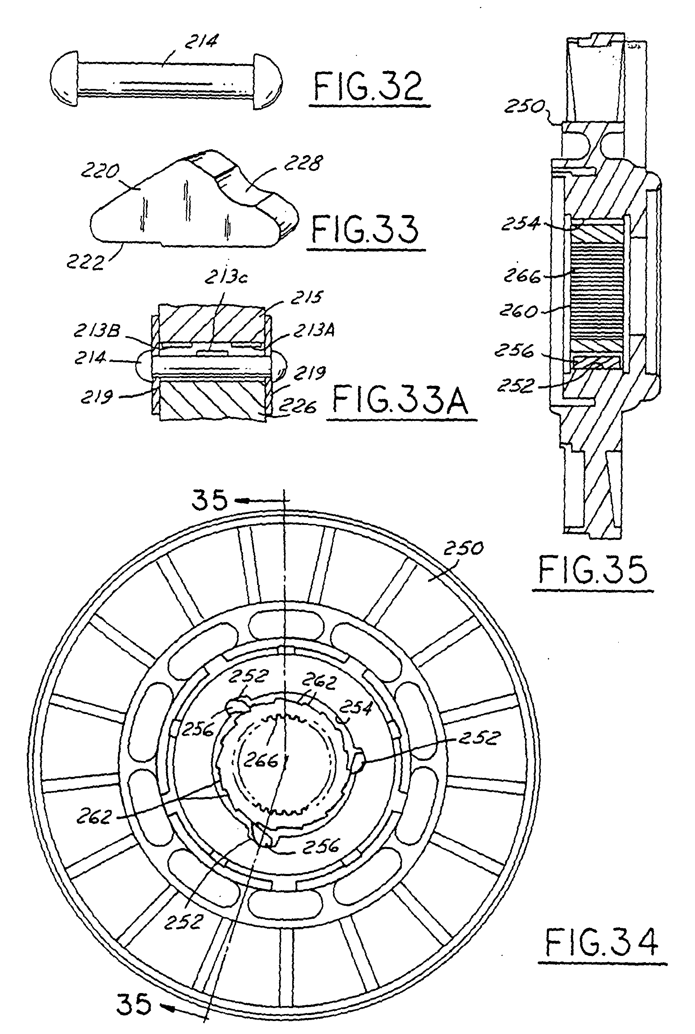

Alternative embodiments for use with the present invention are shown in Figures 34-44. These embodiments can provide improved economies in cost, manufacture and assembly procedures, as well as improved performance.

As shown in Figures 34-35, the pawl pocket members are incorporated directly as part of a stator or reactor member 250 for a torque converter or the like. The member 250 can be any integral part which would require a one-way clutch mechanism. Preferably, the member 250 is made for an aluminium, plastic or another material which can be cast and machined relatively easily. A plurality of pocket members 252 are formed and/or machined directly into the inner diameter surface 254 of the member 250. The pawl members 256, which are positioned in the pockets 252, can be of the types shown and described herein, and can be urged toward the engaged position by predetermined positioning of the center of mass CM, or by one of the various types of spring members or mechanisms, all as discussed herein.

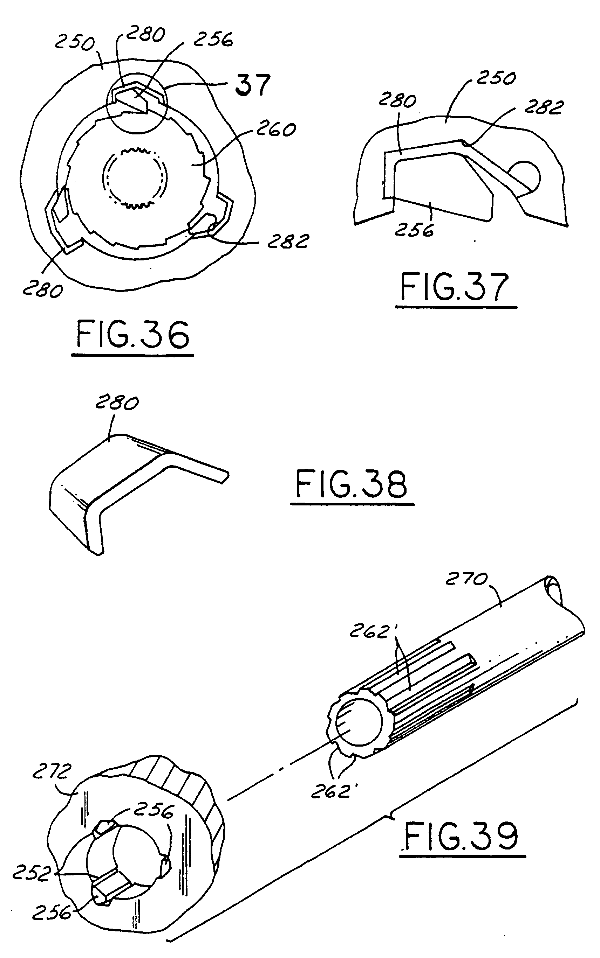

The inner member 260 can be any typical inner race member of the type discussed above with a plurality of locking notches 262 positioned around its outer circumstances 264. Alternatively, the central shaft member which typically mates with the inner race member by mating teeth or spline members 266 or the like, can have the notches machined or formed directly on the outer circumference of the shaft, thereby eliminating the inner race member. Such an assembly is shown in Figure 39 wherein a plurality of notches 262' are provided on shaft member 270, which typically is hollow, and the shaft member is then mated with member 272 which can be an outer race member, a stator or reactor member, or the like. Shaft member 270 can be, for example, part of a vehicle transmission.

Any number of pockets and notches can be provided as desired by the clutch designer and/or in accordance with the operating specifications and parameters for the clutch mechanism. In the assembly shown in Figures 34-35, three pockets and pawl members are provided and uniformly spaced around the inner circumference/diameter of the outer member 250. In order to effectively and efficiently mate with this number of pawl members and to allow the clutch mechanism to look-up in the desired time with limited backlash (e.g. twelve degrees), preferably ten notches are provided in the inner member.

Figures 36-38 depict an alternate embodiment of the invention in which insert members 280 are provided. The insert members 280 are made from steel or another hard or hardened material and are used to prevent damage to soften materials which might be utilized for the outer stator, reactor or other member 250 when the clutch mechanism is utilized. The inserts can be made of stamped steel or the like.

The pocket members 282 in the member 250 are provided with a larger space or area to allow positioning of the insert members 280 therein. The insert members are press fit, swaged or otherwise permanently secured in the pockets 282. The pawl members 256 are positioned inside the cupped insert members as shown.

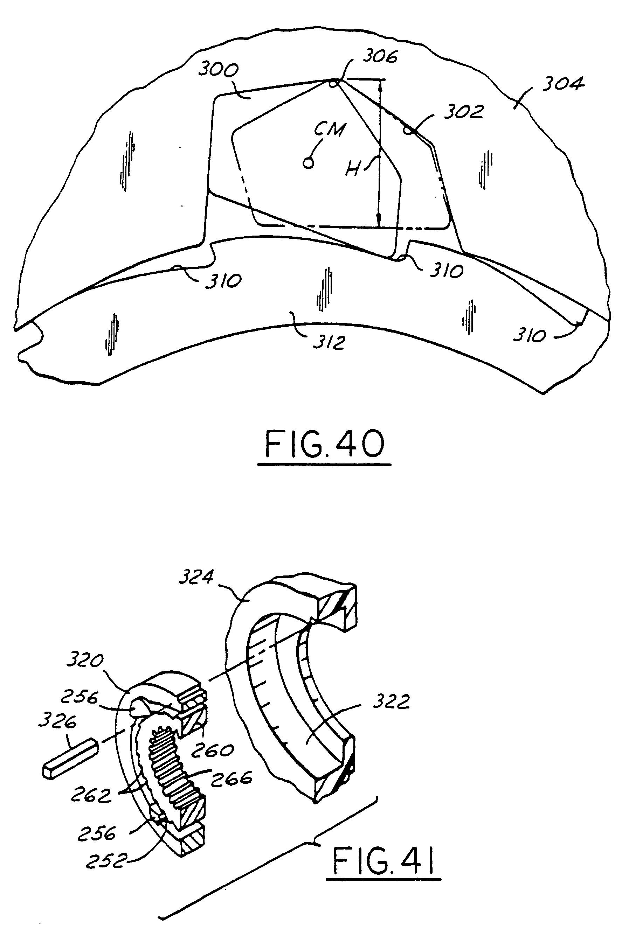

Another pawl member which can be utilized with the present invention is shown in Figure 40. In this embodiment, the pawl member 300 has a different size and proportions from the pawl members shown above. In particular, the pawl members 300 have a greater height H in the radial direction. This increases the load-carrying capacity of the clutch mechanism.

As with the other assemblies presented above, the pawl member 300 is positioned in a pocket 302 in an other member 304, which can be an outer race, a stator or reactor, or the like. The center of mass CM of the pawl member 300 can be positioned as shown relative to the peak or pivot ridge 306, such that a pawl engaging force is generated upon rotation of the outer member 304. Similarly, a plurality of notches 310 are formed in the inner member 312, which can be an inner race, a shaft member, or the like.

It is also possible to utilize one of the spring members or mechanisms of the types and embodiments discussed above in order to assist in providing a tilting force on the pawl members 300 toward engagement. The use of retainment washers or thrust bearings on one or more sides of the ratchet one-way clutch mechanism shown in Figure 40 could also be provided. Appropriate lubrication channels and openings could further be provided as are conventionally utilized in the clutch area.

As an additional embodiment, it is also possible to provide the outer member the outer member as an insert which is combined with a stator, reactor or other mechanical member. This is shown in Figure 41. The outer member 320 has an annular shape and is adapted to fit within cavity or recess 322 in the stator, reactor or other member 324. The outer member 320, which preferably is made from a metal material, can be press fit or keyed by key member 326 into the member 324. In this manner, the member 324 can be made from a lower cost material, such as a plastic material. The other portion of the clutch mechanism, including the inner member 260, pawl members 256 and the like are the same as those set forth above.

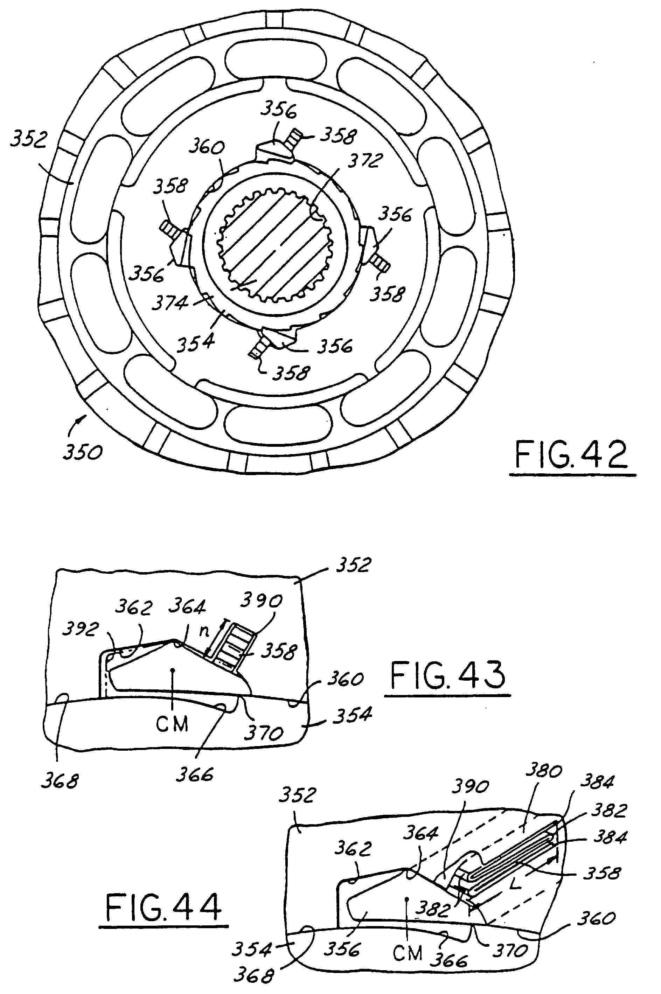

A further preferred embodiment of the invention is shown in Figures 42-44 and referred to generally by the reference number 350. This preferred embodiment of a pawl-type one-way clutch mechanism has essentially four parts: a stator member 352, an inner race member 354, a plurality of pawl members 356, and a plurality of spring members 358.

The inside diameter 360 of the stator member 352 is machined to accept the inner race member 354, preferably with a very small clearance (of the order of 0.001-0.005 inches) (0.03 - 0.1 mm). The stator also has a plurality of pockets 362 formed in the inside diameter to house the pawl members 356. The pawl members and pockets are formed similar to the pawl members and pockets described above, except that the centers of mass (CM) are situated relative to the ridges 364 of the ridges such that the pawl members are biased towards disengagement.

The inner race member 354 has a plurality of notches 366 formed in its outer diameter or surface 368. The notches are formed to provide a plurality of teeth 370 which are used to engage the pawl members and prevent rotation of the stator member 352 in one direction relative to the inner race member 354. The two members 352 and 354 are allowed to rotate freely, i.e. freewheel, in the opposite direction. The inside diameter 372 of the inner race member 354 has a conventional splined configuration to mate with, for example, a stationary support shaft member 374 anchored to a transmission.

The spring members 358 are leaf-spring members formed from folded pieces of spring-type metal material, such as steel. The material is folded into a Z-shaped spring configuration with the lengths 380 of the spring members being positioned in the axial direction of the clutch mechanism and the end folds 382 and free ends 384 of the spring members being positioned at or near the ends of the axial lengths of the pawl members. In this regard, the spring members 358 preferably extend substantially the full length of the pawl members 356 and provide engagement biasing forces uniformly across the pawl members.

The spring members 358 are positioned in recesses or pockets 390 formed in the stator member 352 and which intersect or open into the pawl pockets 362. The recesses 390 have a height "h" sufficient to retain the spring members 358 in a compressed or biased condition so that the springs will provide biasing forces on the pawl members. The recesses 390 have lengths "L" which are substantially the lengths of the pawl members.

In the embodiment shown in Figure 42+44, four pawl members and eighteen notches are provided. In the presently preferred embodiment, four pawl members and ten notches are provided. Other numbers of pawl members and notches can also be provided, as stated above, depending on the design of the one-way clutch assembly and its intended use and environment. Preferably, the arrangement and positioning of the pawl members and notches are provided such that two pawl members engage simultaneously to prevent rotation of the clutch mechanism.

The pockets 362 can be machined in the stator member 352 by a milling or broaching operation, as desired. The pockets also could be formed in the stator when it is cast. Preferably, a casting operation could provide the precise size and dimensions of the pockets to eliminate the need to finish machine them to a final dimension.

In the preferred embodiment shown in Figures 42-44, the inner race can be provided of a steel material, as is conventionally known. However, the outer member is preferably made of non-ferrous material, such as aluminium or a plastic material. These materials are lighter in weight than steel and preferably should be provided with sufficient strength and durability to meet the specifications and required performance of the one-way clutch mechanism. The spring member and pawl members can be provided of any conventional materials used with present one-way clutch mechanisms, such as steel.

Although an aluminium metal material is preferred for the stator member, other non-ferrous metal materials could be utilized. These include titanium, zinc, nickel and superalloys commonly used in high temperature engine applications, such as gas turbine engines.

Plastic materials which could be utilized for the stator members 352 preferably include any materials used in high heat and high stress applications today. The materials should have high tensile and flexural strength and should have structural integrity in the presence of hydraulic fluids or other fluids commonly used in vehicle or engine transmission systems.

Both thermosetting and thermoplastic materials may be considered. Polymers such as polypropylene, polyethylene (high density preferred), nylon and polyvinylchloride (high molecular weight preferred) can be considered as suitable plastic materials. One of ordinary skill in the art will readily appreciate that various design parameters may be adjusted by the addition of plasticizers, heat stablizers, fillers, lubricants, and the like to the polymer. The plastic materials can also be reinforced with glass fibers or the like. Finally, as disclosed in US Patent No. 5,121,686, phenolic resin plastics, also known by the tradename Duroplast, are used in the manufacture of automotive clutch assemblies and are also suitable for the manufacture of the stator members described herein.

In order to insure that the forces acting on the pawls due to engagement of the clutch mechanism, and thus the forces applied to the pocket walls in the stator members, do not damage the pockets or stator members, it is possible to provide inserts of a harder material in each of the pockets. Thus, insert members of the type described above with reference to Figures 36-38 could be provided. Similarly, the walls of the pockets could be lined with a harder coating or material, such as shown by dashed line 392 in Figure 43.

In the preferred embodiments utilizing non-ferrous stator members, it is also possible to utilize other spring members as mechanisms to bias the pawl members toward engagement, i.e. as alternatives to the Z-shaped leaf spring members shown in Figures 42-44. For this purpose, one or more garter spring members could be utilized, such as shown above in Figures 3-7. With such spring members, corresponding pawl members with recesses, such as shown in Figures 8-10, would also be utilized.

## Claims

1. A one-way ratchet clutch assembly comprising:
an outer member (176; 206; 215; 250; 304; 320; 352) having a plurality of first pockets (178; 216; 252; 282; 302; 362);
an inner race member (226; 260; 312; 354) having a plurality of notches (224; 262; 262'; 310; 366); and
a plurality of pawl members (160; 172; 204; 220; 256; 300; 356), one of said pawl members positionable in each of said first pockets (178; 216; 252; 282; 302; 362);
biasing means (168; 170; 200; 210; 358) for biasing said pawl members (160; 172; 204; 220; 256; 300; 356) towards engagement with said notches (224; 262; 262'; 310; 366);
said biasing means (168; 170; 200; 210; 358) comprising at least one spring member (168; 170; 200; 210; 358) positionable in operative engagement with at least one of the pawl members (160; 172; 204; 220; 256; 300; 356) and; said pawl members each having a ridge (364) thereon and said first pockets (178; 216; 252; 282; 302; 362) each having a corresponding first recess for mating with said ridge (364), wherein
the at least one spring member (166; 170; 200; 210; 358) has substantially the same axial width as the pawl members (160; 172; 204; 220; 256; 300; 356).

2. An assembly according to claim 1, wherein the at least one spring member (168; 170; 200; 210; 358) comprises a tab member (168) connected to a ribbon spring member (164) positionable between the inner race member (226; 260; 312; 354) and the outer member (176; 206; 215; 250; 304; 320; 352) the ribbon spring member (164) having a plurality of windows (166), one of the pawl members (160) being positionable in each of said windows (166), the tab member (168) being configured to bias a respective pawl member (160) towards engagement with the notches (224; 262; 262'; 310; 366) in the inner race (226; 260; 312; 354).

3. An assembly according to claim 1, wherein a second recess (174; 213; 390) is provided in the outer member (176; 206; 215; 352) in operative communication with one of said first pockets (178; 216; 362), of the at least one spring member (170; 200; 358) being positioned in the second recess (174; 213; 390) for biasing a respective pawl member (172; 204; 220; 356) toward engagement with said notches (224; 366) in said inner race (226; 354).

4. An assembly according to claim 3, wherein the at least one spring member (170; 200; 358) comprises an accordion-type spring member (170; 200; 358).

5. An assembly according to claim 4, wherein said accordion-type spring member (170; 200; 358) has a plurality of folds (202; 382) thereon and is positioned in said clutch assembly such that said folds (202; 382) are positioned tangentially therein.

6. An assembly according to claim 3, wherein said at least one spring member (210) comprises a bent piece of spring steel material (210) held in place in said outer race member (215) by a rivet member (214).

7. An assembly according to claim 6, wherein the second recess (213) comprises a second pocket (213) adjacent one of said first pockets (216), a first portion (212) of the at least one spring member (210) being positioned in the second pocket (213).

8. An assembly according to claim 7 wherein the at least one spring member (210) is secured in said second pocket (213) by the rivet member (214).

9. An assembly according to claim 7 or 8, wherein the first portion (212) comprises an inverted V-shaped portion (212).

10. An assembly according to claim 9, wherein the V-shaped portion (212) is positioned around the rivet member (214).

11. An assembly according to claim 3, wherein the at least one spring member (168; 170; 200; 210; 358) comprises a Z-spring member (170; 200; 358).

12. An assembly according to claim 11, wherein the Z-spring member (170; 200; 358) is made from a single piece of folded spring steel material (170; 200; 358).

13. An assembly according to claim 11 or 12, wherein the folds (202; 382) of the Z spring member (200; 350) are oriented in a direction transverse to the axial direction of the clutch assembly.

14. An assembly according to claim 11 or 12, wherein the folds of the Z spring member (170) are oriented in the axial direction of the clutch assembly.

15. An assembly according to any one of the preceding claims, wherein said pawl members (160; 170; 204; 220; 256; 300; 356) are retained in said first pockets (178; 216; 252; 282; 302; 362) during rotation of one of said inner race member (226; 260; 312; 354) or said outer member (176; 206; 215; 250; 304; 320; 352) in one direction relative to the other of said inner race member or said outer member, and at least one of said pawl members (160; 172; 204; 220; 256; 300; 356) engages with one of said notches (224; 262; 262'; 310; 366) when said inner race member and said outer member are rotated relative to each other in the opposite direction.

16. An assembly according to claim 15, wherein the outer member (176; 206; 215; 250; 304; 320; 352) is a race member and said means for biasing said pawl members (160; 172; 204; 220; 256; 300; 356) further comprises the ridge member (364) on each of said pawl members (160; 172; 204; 220; 256; 300; 356), and the corresponding first recess in each of said pockets (178; 216; 252; 282; 302; 362), and a configuration of each of said pawl members (160; 172; 204; 220; 256; 300; 356) which positions the center of mass (CM) thereof relative to said ridge member (364) such that upon rotation of said outer race member (172; 206; 215; 250; 304; 320; 352) centrifugal force causes each pawl member (160; 172; 204; 220; 256; 300; 356) to move toward engagement, disengagement or a neutral position.

17. An assembly according to any one of the preceding claims, wherein a number of notches (224; 262; 262'; 310; 366) are provided which is different to the number of pawl members (160; 172; 204; 220; 256; 300; 356).

18. An assembly according to any one of the preceding claims, further comprising a pair of disc-shaped retention members (62; 64; 100; 112) positioned on opposite sides of said assembly.

19. An assembly according to claim 18, wherein the disc members (62; 64; 100; 112) are annular and said disc members assist in axially retaining the pawl members (160; 172; 204; 220; 256; 300; 356) in said first pockets (178; 216; 252; 282; 302; 362).

20. An assembly according to claim 18 or 19, wherein one of said pair of retention members (62; 64; 100; 112) includes a plurality of guide members (118) thereon, said guide members (118) being positioned between said inner race member (226; 260; 312; 354) and said outer member (176; 206; 215; 250; 304; 320; 352).

21. An assembly according to claim 20, wherein said guide members (118) extend axially.

22. An assembly according to any one of the preceding claims
wherein said pawl members (160; 172; 204; 220; 256; 300; 356) have a curved recess on one external surface.

## Patentansprüche

1. Einweg-Klinkenkupplungsanordnung, die umfasst;
ein äußeres Element (176; 206; 215; 250; 304; 320; 352) mit einer Vielzahl erster Aussparungen (178; 216; 252; 282; 302; 362);
ein inneres Laufringelement (226; 260; 312; 354) mit einer Vielzahl von Einkerbungen (224; 262; 262'; 310; 366), und
eine Vielzahl von Klinkenelementen (160; 172; 204; 220; 256; 300; 356), wobei eines der Klinkenelemente in jeder der ersten Aussparungen (178; 216; 252; 282; 302; 362) positioniert werden kann;
Spanneinrichtungen (168; 170; 200; 210; 358), die die Klinkenelemente (160; 172; 204; 220; 256; 300; 356) auf Kontakt mit den Einkerbungen (224; 262; 262'; 310; 366) zu spannen;
wobei die Spanneinrichtungen (168; 170; 200; 210; 358) wenigstens ein Federelement (168; 170; 200; 210; 358) umfassen, das in funktionellem Kontakt mit wenigstens einem der Klinkenelemente (160; 172; 204; 220; 256; 300; 356) positioniert werden kann, und
die Klinkenelemente jeweils einen Höcker (364) daran aufweisen, die ersten Aussparungen (178; 216); 252; 282; 302; 362) jeweils eine entsprechende erste Vertiefung zum Eingriff mit dem Höcker (364) haben, wobei das wenigstens eine Federelement (166; 170; 200; 210; 358) im Wesentlichen die gleiche axiale Breite hat wie die Klinkenelemente (160; 172; 204; 220; 256; 300; 356).

2. Anordnung nach Anspruch 1, wobei das wenigstens eine Federelement (168; 170; 200; 210; 358) ein Zungenelement (168) umfasst, das mit einem Bandfederelement (164) verbunden ist, das zwischen dem inneren Laufringelement (226; 260; 312; 354) und dem äußeren Element (176; 206; 215; 250; 304; 320; 352) positioniert werden kann, wobei das Bandfederelement (164) eine Vielzahl von Ausschnitten (166) aufweist und eines der Klinkenelemente (160) in jedem der Ausschnitte (166) positioniert werden kann und das Zungenelement (168) so ausgeführt ist, dass es ein entsprechendes Klinkenelement (160) auf Kontakt mit den Einkerbungen (224; 262; 262'; 310; 366) in dem inneren Laufring (226; 260; 312; 354) zu spannt.

3. Anordnung nach Anspruch 1, wobei eine zweite Vertiefung (174; 213; 390) in dem äußeren Element (176; 206; 215; 352) in funktioneller Verbindung mit einer der ersten Aussparungen (187; 216; 362) vorhanden ist und das wenigstens eine Federelement (170; 200; 358) in der zweiten Vertiefung (174; 213; 390) positioniert ist, um ein entsprechendes Klinkenelement (172; 204; 220; 356) auf Kontakt mit den Einkerbungen (224; 366) in dem inneren Laufring (226; 354) zuzuspannen.

4. Anordnung nach Anspruch 3, wobei das wenigstens eine Federelement (170; 200; 358) ein ziehharmonikaartiges Federelement (170; 200; 358) umfasst.

5. Anordnung nach Anspruch 4, wobei das ziehharmonikaartige Federelement (170; 200; 358) eine Vielzahl von Falten (202; 382) daran aufweist und in der Kupplungsanordnung so positioniert ist, dass die Falten (202; 382) tangential darin positioniert sind.

6. Anordnung nach Anspruch 3, wobei das wenigstens eine Federelement (210) ein gebogenes Stück aus Federstahlmaterial (210) umfasst, das in dem äußeren Laufringelement (215) durch ein Nietelement (214) festgehalten wird.

7. Anordnung nach Anspruch 6, wobei die zweite Vertiefung (213) eine zweite Aussparung (213) an eine der ersten Aussparungen (216) angrenzend umfasst und ein erster Teil (212) des wenigstens einen Federelementes (210) in der zweiten Aussparung (213) positioniert ist.

8. Anordnung nach Anspruch 7, wobei das wenigstens eine Federelement (210) in der zweiten Aussparung (213) durch das Nietelement (214) befestigt ist.

9. Anordnung nach Anspruch 7 oder 8, wobei der erste Teil (212) einen umgekehrt V-förmigen Teil (212) umfasst.

10. Anordnung nach Anspruch 9, wobei der V-förmige Teil (212) um das Nietelement (214) herum positioniert ist.

11. Anordnung nach Anspruch 3, wobei das wenigstens eine Federelement (168; 170; 200; 210; 358) ein Z-Federelement (170: 200; 358) umfasst.

12. Anordnung nach Anspruch 11, wobei das Z-Federelement (170; 200; 358) aus einem einzelnen Stück aus gefaltetem Federstahlmaterial (170; 200; 358) besteht.

13. Anordnung nach Anspruch 11 oder 12, wobei die Falten (202; 382) des Z-Federelementes (200; 350) in einer Richtung quer zur axialen Richtung der Kupplungsanordnung ausgerichtet sind.

14. Anordnung nach Anspruch 11 oder 12, wobei die Falten des Z-Federelementes (170) in der axialen Richtung der kupplungsanordnung ausgerichtet sind,

15. Anordnung nach einem der vorangehenden Ansprüche, wobei die Klinkenelemente (160; 170; 204; 220; 256; 300; 356) in den ersten Aussparungen (178; 216; 252; 282; 302; 362) bei Drehung des inneren Laufringelementes (226; 260; 312; 354) oder des äußeren Elementes (176; 206; 215; 250; 304; 320; 352) in einer Richtung relativ zu dem anderen, d.h., dem inneren Laufringelement oder dem äußeren Element, gehalten werden und wenigstens eines der Klinkenelemente (160; 172; 204; 220; 256; 300; 356) mit einer der Einkerbungen (224; 262; 262'; 310; 366) in Eingriff kommt, wenn das innere Laufringelement und das äußere Element relativ zueinander in der entgegengesetzten Richtung gedreht werden.

16. Anordnung nach Anspruch 15, wobei das äußere Element (176; 206; 215; 250; 304; 320; 352) ein Laufringelement ist und die Einrichtung zum Spannen der Klinkenelemente (160; 172; 204; 220; 256; 300; 356) des Weiteren das Höckerelement (364) an jedem der Klinkenelemente (160; 172; 204; 220; 256; 300; 356) sowie die entsprechende erste Vertiefung in jeder der Aussparungen (178; 216; 252; 282; 302; 362) und eine Form jedes der Klinkenelemente (160; 172; 204; 220; 256; 300; 356) umfasst, durch die der Schwerpunkt (CM) derselben relativ zu dem Höckerelement (364) so positioniert wird, dass bei Drehung des äußeren Laufringelementes (172; 206; 215; 250; 304; 320; 352) Zentrifugalkraft bewirkt, dass jedes Klinkenelement (160; 172; 204; 220; 256; 300; 356) sich auf Eingriff, Lösung oder eine neutrale Position zubewegt.

17. Anordnung nach einem der vorangehenden Ansprüche, wobei eine Anzahl von Einkerbungen (224; 262; 262'; 310; 366) vorhanden ist, die sich von der Anzahl von Klinkenelementen (160; 172; 204; 220; 256; 300; 356) unterscheidet.

18. Anordnung nach einem der vorangehenden Ansprüche, die des Weiteren ein Paar scheibenförmiger Halteelemente (62; 64, 100; 112) umfasst, die an einander gegenüberliegenden Seiten der Anordnung positioniert sind.

19. Anordnung nach Anspruch 18, wobei die Scheibenelemente (62; 64; 100; 112) ringförmig sind und die Scheibenelemente dazu beitragen, die Klinkenelemente (160; 172; 204; 220; 256; 300; 356) axial in den ersten Aussparungen (178; 216; 252; 282; 302; 362) zu halten.

20. Anordnung nach Anspruch 18 oder 19, wobei eines des Paars von Halteelementen (62; 64; 100; 112) eine Vielzahl von Leitelementen (118) daran enthält und die Leitelemente (118) zwischen dem inneren Laufringelement (226; 260; 312; 354) und dem äußeren Element (176; 206; 215; 250; 304; 320; 352) positioniert sind.

21. Anordnung nach Anspruch 20, wobei sich die Leitelemente (118) axial erstrecken.

22. Anordnung nach einem der vorangehenden Ansprüche, wobei die Klinkenelemente (160; 172; 204; 220; 256; 300; 356) eine gekrümmte Vertiefung in einer Außenfläche haben.

## Revendications

1. Ensemble d'embrayage à cliquets unidirectionnel comprenant :
un élément externe (176 ; 206 ; 215 ; 250 ; 304 ; 320 ; 352) comportant une pluralité de premières poches (178 ; 216 ; 252 ; 282 ; 302 ; 362) ;
un élément d'anneau interne (226 ; 260 ; 312 ; 354) comportant une pluralité d'encoches (224 ; 262 ; 262' ; 310 ; 366) ; et
une pluralité d'éléments de cliquet (160 ; 172 ; 204 ; 220 ; 256 ; 300 ; 356), un desdits éléments de cliquet positionnable dans chacune desdites premières poches (178 ; 216 ; 252 ; 282 ; 302 ; 362) ;
un moyen de sollicitation (168 ; 170 ; 200 ; 210 ; 358) pour solliciter lesdits éléments de cliquet (160 ; 172 ; 204 ; 220 ; 256 ; 300 ; 356) vers la mise en prise avec lesdites encoches (224 ; 262 ; 262' ; 310 ; 366) ;
ledit moyen de sollicitation (168 ; 170 ; 200 ; 210 ; 358) comprenant au moins un élément de ressort (168 ; 170 ; 200 ; 210 ; 358) positionnable en mise en prise fonctionnelle avec au moins un des éléments de cliquet (160 ; 172 ; 204 ; 220 ; 256 ; 300 ; 356) et ;
lesdits éléments de cliquet ayant chacun une arête (364) sur ceux-ci et lesdites premières poches (178 ; 216 ; 252 ; 282 ; 302 ; 362) ayant chacune un premier évidement correspondant pour s'adapter à ladite arête (364), dans lequel
l'au moins un élément de ressort (166 ; 170 ; 200 ; 210 300 ; 358) présente sensiblement la même largeur axiale que les éléments de cliquet (160 ; 172 ; 204 ; 220 ; 256 ; 300 ; 356).

2. Ensemble selon la revendication 1, dans lequel l'au moins un élément de ressort (168 ; 170 ; 200 ; 210 ; 358) comprend un élément de patte (168) raccordé à un élément de ressort à ruban (164) positionnable entre l'élément d'anneau interne (226 ; 260 ; 312 ; 354) et l'élément externe (176 ; 206 ; 215 ; 250 ; 304 ; 320 ; 352), l'élément de ressort à ruban (164) ayant une pluralité de fenêtres (166), un des éléments de cliquet (160) étant positionnable dans chacune desdites fenêtres (166), l'élément de patte (168) étant configuré pour solliciter un élément de cliquet respectif (160) vers la mise en prise avec les encoches (224 ; 262 ; 262' ; 310 ; 366) dans l'anneau interne (226 ; 260 ; 312 ; 354).

3. Ensemble selon la revendication 1, dans lequel un second évidement (174 ; 213 ; 390) est ménagé dans l'élément externe (176 ; 206 ; 215 ; 352) en communication fonctionnelle avec une desdites premières poches (178 ; 216 ; 362), un au moins élément de ressort (170 ; 200 ; 358) étant positionné dans le second évidement (174 ; 213 ; 390) pour solliciter un élément de cliquet respectif (172 ; 204 ; 220 ; 356) vers la mise en prise avec lesdites encoches (224 ; 366) dans ledit anneau interne (226 ; 354).

4. Ensemble selon la revendication 3, dans lequel au moins un élément de ressort (170 ; 200 ; 358) comprend un élément de ressort du type accordéon (170 ; 200 ; 358).

5. Ensemble selon la revendication 4, dans lequel ledit élément de ressort du type accordéon (170 ; 200 ; 358) comporte une pluralité de plis (202 ; 382) sur celui-ci et est positionné dans ledit ensemble d'embrayage de sorte que lesdits plis (202 ; 382) sont positionnés tangentiellement dans celui-ci.

6. Ensemble selon la revendication 3, dans lequel ledit au moins un élément de ressort (210) qomprend une pièce courbe constituée d'un matériau d'acier à ressort (210) maintenue en place dans ledit élément d'anneau externe (215) par un élément de rivet (214).

7. Ensemble selon la revendication 6, dans lequel le second évidement (213) comprend une seconde poche (213) adjacente à l'une desdites premières poche (216), une première partie (212) dudit au moins un élément de ressort (210) étant positionnée dans la seconde poche (213).

8. Ensemble selon la revendication 7, dans lequel le au moins un élément de ressort (210) est fixé dans ladite seconde poche (213) par l'élément de rivet (214).

9. Ensemble selon la revendication 7 ou 8, dans lequel la première partie (212) comprend une partie en forme de V inversé (212).

10. Ensemble selon la revendication 9, dans lequel la partie en forme de V (212) est positionnée autour de l'élément de rivet (214).

11. Ensemble selon la revendication 3, dans lequel le au moins un élément de ressort (168 ; 170 ; 200 ; 210 ; 358) comprend un élément de ressort en Z (170 ; 200 ; 358).

12. Ensemble selon la revendication 11, dans lequel l'élément de ressort en Z (170 ; 200 ; 358) est constitué à partir d'une seule pièce d'un matériau d'acier à ressort plié (170 ; 200 ; 358).

13. Ensemble selon la revendication 11 ou 12, dans lequel les plis (202 ; 382) de l'élément de ressort en Z (200 ; 350) sont orientés dans une direction transversale à la direction axiale de l'ensemble d'embrayage.

14. Ensemble selon la revendication 11 ou 12, dans lequel les plis de l'élément de ressort en Z (170) sont orientés dans la direction axiale de l'ensemble d'embrayages.

15. Ensemble selon l'une quelconque des revendications précédentes, dans lequel lesdits éléments de cliquet (160 ; 170 ; 204 ; 220 ; 256 ; 300 ; 356) sont retenus dans lesdites premières poches (178 ; 216 ; 252 ; 282 ; 302 ; 362) pendant la rotation d'un dudit élément d'anneau interne (226 ; 260 ; 312 ; 354) ou dudit élément externe (176 ; 206 ; 215 ; 250 ; 304 ; 320 ; 352) dans une direction par rapport à l'autre dudit élément d'anneau interne ou dudit élément externe, et au moins un desdits éléments de cliquet (160 ; 172 ; 204 ; 220 ; 256 ; 300 ; 356) se met en prise avec une desdites encoches (224 ; 262 ; 262' ; 310 ; 356) lorsque ledit élément d'anneau interne et ledit élément externe sont mis en rotation l'un par rapport à l'autre dans la direction opposée.

16. Ensemble selon la revendication 15, dans lequel l'élément externe (176 ; 206 ; 215 ; 250 ; 304 ; 320 ; 352) est un élément d'anneau et ledit moyen pour solliciter lesdits éléments de cliquet (160 ; 172 ; 204 ; 220 ; 256 ; 300 ; 356) comprend, en outre, l'élément d'arête (364) sur chacun desdits éléments de cliquet (160 ; 172 ; 204 ; 220 ; 256 ; 300 ; 356), et le premier évidement correspondant dans chacune desdites poches (178 ; 216 ; 252 ; 282 ; 302 ; 362), et une configuration de chacun desdits éléments de cliquet (160 ; 172 ; 204 ; 220 ; 256 ; 300 ; 356) qui positionne le centre d'inertie (CM) de celui-ci par rapport audit élément d'arête (364) de sorte que sur rotation dudit élément d_{'}anneau externe (172 ; 206 ; 215 ; 250 ; 304 ; 320 ; 352) la force centrifuge amène chaque élément de cliquet (160 ; 172 ; 204 ; 220 ; 256 ; 300 ; 356) à se déplacer vers la mise en prise, la sortie ou une position neutre.

17. Ensemble selon l'une quelconque des revendications précédentes, dans lequel un nombre d'encoches (224 ; 262 ; 262' ; 310 ; 366) sont ménagées qui est différent du nombre des éléments de cliquet (160 ; 172 ; 204 ; 220 ; 256 ; 300 ; 356).

18. Ensemble selon l'une quelconque des revendications précédentes, comprenant, en outre, une paire d'éléments de rétention en forme de disque (62 ; 64 ; 100 ; 112) positionnés sur les côtés opposés dudit ensemble.

19. Ensemble selon la revendication 18, dans lequel les éléments de disque (62 ; 64 ; 100 ; 112) sont annulaires et lesdits éléments de disque aident à retenir axialement les éléments de cliquet (160 ; 172 ; 204 ; 220 ; 256 ; 300 ; 356) dans lesdites premières poches (178 ; 216 ; 252 ; 282 ; 302 ; 362).

20. Ensemble selon la revendication 18 ou 19, dans lequel un de ladite paire des éléments de rétention (62 ; 64 ; 100 ; 112) inclut une pluralité d'éléments de guidage (118) sur celui-ci, lesdits éléments de guidage (118) étant positionnés entre ledit élément d'anneau interne (226 ; 260 ; 312 ; 354) et ledit élément externe (176 ; 206 ; 215 ; 250 ; 304 ; 320 ; 352).

21. Ensemble selon la revendication 20, dans lequel lesdits éléments de guidage (118) s'étendent dans le sens axial.

22. Ensemble selon l'une quelconque des revendications précédentes, dans lequel lesdits éléments de cliquet (160 ; 172 ; 204 ; 220 ; 256 ; 300 ; 356) comporte un évidement incurvé sur une surface externe.
